# EUROPÄISCHE PATENTANMELDUNG

(11) **EP 3 557 497 A1**
(43) Veröffentlichungstag der Anmeldung: **23.10.2019**
(21) Anmeldenummer: 18168190.9
(22) Anmeldetag: 19.04.2018
(51) Int. Cl.: G06Q 10/00, G06Q 10/06

(54) **INTEGRIERTES KALIBRIER-, WARTUNGS- UND QUALIFIZIERUNGSMANAGEMENTSYSTEM**

(71) Anmelder: Siemens Aktiengesellschaft, 80333 München (DE)
(72) Erfinder: Lauterlein, Benjamin, 07957 Langenwetzendorf (DE); Gierse, Alexander, 67061 Ludwigshafen (DE); Krauß, Stefan, 68259 Mannheim (DE)

(57) **Zusammenfassung**

Vorgeschlagen wird ein computerimplementiertes Verfahren zur automatisierten Erzeugung eines Aufgabenzyklus zum Erhalt einer Anlagenverfügbarkeit einer industriellen Anlage, umfassend:
a) Auslesen von für die Anlagenverfügbarkeit relevanten Daten aus die Daten bereitstellenden Systemen, wobei es sich bei den Systemen um einer der folgenden Kombinationen handelt:
- Ein Wartungssystem, das zur Erzeugung von Wartungszyklen ausgebildet ist, und ein Kalibriersystem, das zur Erzeugung von Kalibrierzyklen ausgebildet ist;
- Das Wartungssystem und ein Qualifiziersystem, das zur Erzeugung von Qualifizierungszyklen ausgebildet ist;
- Das Kalibriersystem und das Qualifiziersystem;
- Das Kalibriersystem, das Wartungssystem und das Qualifiziersystem;

b) Integrieren der Daten in ein Verarbeitungssystem,
c) Erzeugen des Aufgabenzyklus mittels der in das Verarbeitungssystem integrierten Daten,
d) Verwenden des Aufgabenzyklus zum Erhalt der Anlagenverfügbarkeit der industriellen Anlage.

## Beschreibung

Die Erfindung betrifft ein computerimplementiertes Verfahren zur automatisierten Erzeugung eines Aufgabenzyklus zum Erhalt einer Anlagenverfügbarkeit einer industriellen Anlage nach Anspruch 1. Des Weiteren betrifft die Erfindung ein Computerprogrammprodukt nach Anspruch 4. Außerdem betrifft die Erfindung ein Datenverarbeitungssystem nach Anspruch 5 und ein Verarbeitungssystem nach Anspruch 7.

Im Rahmen der Digitalisierung industrieller Anlagen stellt sich im Rahmen eines Anlagenmanagements die Frage, ob und wie verschiedene Softwareprodukte miteinander interagieren. Hierzu müssen generell entsprechende Schnittstellen vorhanden sein.

Für Betreiber industrieller Anlagen kann eine nicht automatisierte Datenübertragung zwischen einzelnen Komponenten der Anlage oder eine rein auf Papier basierende Dokumentation mögliche Fehlerquellen darstellen. Hier ergeben sich unter Umständen auch bedeutende Einsparpotenziale.

Speziell ist ein einheitlicher und automatisierter Datenaustausch in Hinblick auf Anlagenzustände (Wartung,- Kalibrierung und Qualifizierungszustände) zwischen einzelnen produktionsrelevanten Softwareprodukten nicht bekannt. Dabei umfasst ein Wartungszustand der industriellen Anlage beispielsweise Informationen über einen Wartungsbedarf von einzelnen Komponenten oder über die dazugehörige Wartungspriorität. Ein Kalibrierungszustand gibt entsprechend Informationen bezüglich eines Kalibrierbedarfs einzelner Komponenten der industriellen Anlage wider. Ein Qualifizierungszustand der industriellen Anlage umfasst beispielsweise Informationen darüber, mit welcher Produktionsqualität ein bestimmtes Erzeugnis in der industriellen Anlage zu einem aktuellen Zeitpunkt erzeugt werden kann.

Unter einer produktionsrelevanten Software werden im Folgenden beispielsweise die folgenden Produkte verstanden:
- Produktionsplanungssoftware (z.B. SIMATIC® IT Preactor)
- Elektronisches Batch-Dokumentationssystem (z.B. SIMATIC® IT eBR)
- Kalibiersoftware (z.B. Beamex®)
- Feldgerätemanagementsoftware (z.B. SIMATIC® PDM)
- Enterprise Resource Planning (z.B. SAP®)
- Deviation Management Software

Ein wesentlicher Punkt des Anlagenmanagements ist die Durchführungsplanung der Kalibrierungs-, Wartungs- und Qualifizierungstätigkeiten. Entsprechende Kalibrierungs-, Wartungs- oder Qualifizierungstätigkeitszyklen dürfen aus Kosten- und Verfügbarkeitsgründen nicht zu kurz oder zu lang gewählt werden. Die Verfügbarkeit der Anlage muss mit der Produktionsplanung und den notwendigen Kalibrierungs-, Wartungs- und Qualifizierungszyklen koordiniert werden. Eine Überschreitung der entsprechenden Zyklen muss in einem Qualitätsmanagementsystem (QMS) bewertet werden.

Bei der Planung einer Produktion ist zu prüfen, ob in der produzierenden Anlage installierte Komponenten bzw. Teile entsprechend gewartet, kalibriert und qualifiziert sind. Sollte dies nicht der Fall sein, kann das, speziell im Fall einer prozesskritischen Messstelle, zu einem zusätzlichen Arbeitsaufwand aufgrund notwendiger Abweichungsuntersuchungen führen und letztendlich in einer verzögerten Freigabe einer Charge resultieren.

Aktuell werden die Wartungs-, Kalibrierungs- und Qualifizierungstätigkeiten zum Erhalt der Anlagenverfügbarkeit getrennt betrachtet. Ein übergreifendes umfassendes Konzept gibt es aktuell nicht. Die jeweiligen Softwareprodukte für die Wartungs-, Kalibrierungs- und Qualifizierungstätigkeiten arbeiten nur den für sie bestimmten Bereich ab. Darüber hinaus weisen sie jeweils eine eigene Datenverwaltung auf.

Der Erfindung liegt die Aufgabe zugrunde, ein Verfahren anzugeben, das einen Arbeitsaufwand bei einer Produktionsplanung einer industriellen Anlage verringert.

Diese Aufgabe wird gelöst durch ein computerimplementiertes Verfahren zur automatisierten Erzeugung eines Aufgabenzyklus zum Erhalt einer Anlagenverfügbarkeit einer industriellen Anlage nach Anspruch 1.

Das erfindungsgemäße Verfahren umfasst dabei die folgenden Verfahrensschritte:
a) Auslesen von für die Anlagenverfügbarkeit relevanten Daten aus die Daten bereitstellenden Systemen. Dabei handelt es sich bei den die Daten bereitstellenden Systemen um eine der folgenden Kombinationen:
   Kombination 1: Ein Wartungssystem, das zur Erzeugung von Wartungszyklen ausgebildet ist, und ein Kalibriersystem, das zur Erzeugung von Kalibrierzyklen ausgebildet ist.
   Kombination 2: Das Wartungssystem und ein Qualifiziersystem, das zur Erzeugung von Qualifizierungszyklen ausgebildet ist.
   Kombination 3: Das Kalibriersystem und das Qualifiziersystem.
   Kombination 4: Das Kalibriersystem, das Wartungssystem und das Qualifiziersystem.
b) Integrieren der Daten in ein Verarbeitungssystem;
c) Erzeugen des Aufgabenzyklus mittels der in das Verarbeitungssystem integrierten Daten;
d) Verwenden des Aufgabenzyklus zum Erhalt der Anlagenverfügbarkeit der industriellen Anlage.

Das Wartungssystem umfasst Informationen über einen Wartungszustand der industriellen Anlage. Hierzu zählen beispielswiese Informationen über einen Wartungsbedarf von einzelnen Komponenten oder über die dazugehörige Wartungspriorität. Das Wartungssystem kann ein oder mehrere Softwareprodukte umfassen, die wartungsrelevante Informationen ermitteln und über Schnittstellen zur Verfügung stellen.

Das Kalibriersystem umfasst Informationen über einen Kalibrierzustand der industriellen Anlage. Ein Kalibrierungszustand gibt entsprechend Informationen bezüglich eines Kalibrierbedarfs einzelner Komponenten der industriellen Anlage wider. Analog zu dem Wartungssystem kann das Kalibriersystem ein oder mehrere Softwareprodukte umfassen, die kalibrierrelevante Informationen ermitteln und über Schnittstellen zur Verfügung stellen.

Das Qualifiziersystem umfasst Informationen über einen Qualifizierzustand der industriellen Anlage. Ein Qualifizierungszustand der industriellen Anlage umfasst beispielsweise Informationen darüber, mit welcher Produktionsqualität ein bestimmtes Erzeugnis in der industriellen Anlage zu einem aktuellen Zeitpunkt erzeugt werden kann. Analog zu dem Wartungs- und Kalibriersystem kann das Qualifiziersystem ein oder mehrere Softwareprodukte umfassen, die qualifizierrelevante Informationen ermitteln und über Schnittstellen zur Verfügung stellen.

Das erfindungsgemäße Verfahren führt einen kompletten und automatischen Abgleich zwischen verschiedenen, für die Anlagenverfügbarkeit relevanten Daten wenigstens zweier verschiedener Systeme (zuvor erläutert) durch. Das Verarbeitungssystem als zentraler Knotenpunkt ermittelt selbstständig mittels der integrierten Daten einen optimierten Aufgabenzyklus zur Erhaltung der Verfügbarkeit der industriellen Anlage. Der Aufgabenzyklus kann dabei beispielsweise Informationen darüber enthalten, wann eine Wartung, Kalibrierung oder Qualifizierung innerhalb der industriellen Anlage vorgenommen werden muss.

Durch die Integration der Daten verschiedener Systeme können mittels des erfindungsgemäßen Verfahrens Ablaufpläne automatisiert erstellt werden, die Planerstellung und -genehmigung, Verwaltung sowie Überwachung der Tätigkeiten im Rahmen der Wartung, Kalibrierung oder Qualifizierung beinhalten können.

Beispielsweise kann ein im Rahmen des erfindungsgemäßen Verfahrens verbesserter Arbeitsablauf folgendermaßen ausgestaltet sein: Eine neue Charge wird in dem System SIMATIC® IT eBR (eBR = electronic batch record) angelegt. Vor der Produktionsfreigabe wird der Anlagenstatus der zu verwendenden Geräte abgefragt. Hierzu wird der erzeugte Aufgabenzyklus zu Hilfe genommen, was Ressourcen sparend ablaufen kann. Befinden sich nicht alle Geräte in einem definierten Zustand, wird die Chargenfreigabe entweder verweigert oder der Bediener muss begründen, warum diese trotzdem freigegeben wird.

Durch die automatische Planung und Optimierung der aus den einzelnen, sich voneinander unterscheidenden Systemen kann ein Betreiber der industriellen Anlage die Personalkosten senken. Dabei erhalten der Betreiber bzw. entsprechende, zur Steuerung und Planung der industriellen Anlage vorgesehene Leitsysteme einen Überblick über den Anlagenstatus, ohne dass dieser manuell geprüft werden muss. Die Produktion kann komplett automatisiert gestartet und die Qualifizierung qualitätsrelevanter Messstellen sichergestellt werden.

Vorteilhafterweise wird der erzeugte Aufgabenzyklus in ein Planning & Scheduling System integriert. Bei dem Planning & Scheduling System kann es sich beispielsweise um das System SIMATIC® IT Preactor handeln. Liegt eine geplante Wartung, Kalibrierung oder Qualifizierung vor, kann mittels des erfindungsgemäßen Verfahrens und einem Austausch mit dem Planning & Scheduling System ein möglicher Zeitpunkt für die Durchführung der anstehenden Aufgabe auf einfache Art und Weise ermittelt werden.

Bei einer bevorzugten Weiterbildung der Erfindung wird eine Dokumentation des erzeugten Aufgabenzyklus automatisiert erzeugt. Durchgeführte und durchzuführende Tätigkeiten lassen sich so zentral dokumentieren und abfragen. Dabei können die Planung, Durchführung und Genehmigung der einzelnen Aufgaben (Kalibrierung, Wartung, Qualifizierung) digital dokumentiert werden, wobei spezielle Anforderungen des Betreibers der industriellen Anlage Berücksichtigung finden können.

Die Aufgabe wird auch gelöst durch ein Computerprogrammprodukt nach Anspruch 4, das Befehle umfasst, die bei der Ausführung des Programms durch einen Computer diesen veranlassen, das zuvor erläuterte Verfahren auszuführen.

Zudem wird die Aufgabe durch ein Datenverarbeitungssystem nach Anspruch 5 gelöst, das Mittel zur Ausführung des zuvor erläuterten Verfahrens umfasst.

Vorteilhafterweise sind ein oder mehrere Mittel zur Ausführung des Verfahrens außerhalb der industriellen Anlage befindlich. Dabei kann es sich beispielsweise um cloudbasierte Mittel handeln, die auf einer oder mehreren externen, außerhalb der industriellen Anlage befindlichen Computersystemen angewandt werden, um einen Teil der Verfahrensschritte durchzuführen. Wenigstens das Auslesen der Daten aus den einzelnen Systemen und das Verwenden des erzeugten Aufgabenzyklus findet jedoch innerhalb der industriellen Anlage statt (auch wenn Anweisungen zum Starten des Auslesevorgangs bzw. zum Anwenden des Aufgabenzyklus selbstverständlich von extern, d.h. von außen her initiiert werden können).

Außerdem wird die Aufgabe gelöst durch ein Verarbeitungssystem, das zum Auslesen von für die Anlagenverfügbarkeit relevanten Daten aus die Daten bereitstellenden Systemen ausgebildet und vorgesehen ist, nach Anspruch 7. Dabei handelt es sich bei den Kombinationen um die vorstehend bereits erläuterten Kombinationen 1 bis 4.

Das Verarbeitungssystem ist zudem zum Integrieren der ausgelesenen Daten und zum Erzeugen des Aufgabenzyklus mittels der in das Verarbeitungssystem integrierten Daten ausgebildet und vorgesehen.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Computerimplementiertes Verfahren zur automatisierten Erzeugung eines Aufgabenzyklus zum Erhalt einer Anlagenverfügbarkeit einer industriellen Anlage, umfassend:
a) Auslesen von für die Anlagenverfügbarkeit relevanten Daten aus die Daten bereitstellenden Systemen, wobei es sich bei den Systemen um einer der folgenden Kombinationen handelt:
- Ein Wartungssystem, das zur Erzeugung von Wartungszyklen ausgebildet ist, und ein Kalibriersystem, das zur Erzeugung von Kalibrierzyklen ausgebildet ist;
- Das Wartungssystem und ein Qualifiziersystem, das zur Erzeugung von Qualifizierungszyklen ausgebildet ist;
- Das Kalibriersystem und das Qualifiziersystem;
- Das Kalibriersystem, das Wartungssystem und das Qualifiziersystem;
b) Integrieren der Daten in ein Verarbeitungssystem,
c) Erzeugen des Aufgabenzyklus mittels der in das Verarbeitungssystem integrierten Daten,
d) Verwenden des Aufgabenzyklus zum Erhalt der Anlagenverfügbarkeit der industriellen Anlage.

2. Computerimplementiertes Verfahren nach Anspruch 1, bei dem der erzeugte Aufgabenzyklus in ein Planning & Scheduling System integriert wird.

3. Computerimplementiertes Verfahren nach Anspruch 1 oder 2, bei dem eine Dokumentation des erzeugten Aufgabenzyklus automatisiert erzeugt wird.

4. Computerprogrammprodukt, umfassend Befehle, die bei der Ausführung des Programms durch einen Computer diesen veranlassen, das Verfahren nach einem der Ansprüche 1 bis 3 auszuführen.

5. System zur Datenverarbeitung, umfassend Mittel zur Ausführung des Verfahrens gemäß einem der Ansprüche 1 bis 3.

6. System nach Anspruch 5, bei dem ein oder mehrere Mittel zur Ausführung des Verfahrens gemäß einem der Ansprüche 1 bis 3 außerhalb der industriellen Anlage befindlich sind.

7. Verarbeitungssystem, das zum Auslesen von für die Anlagenverfügbarkeit relevanten Daten aus die Daten bereitstellenden Systemen ausgebildet und vorgesehen ist, wobei es sich bei den Systemen um einer der folgenden Kombinationen handelt:
- Ein Wartungssystem, das zur Erzeugung von Wartungszyklen ausgebildet ist, und ein Kalibriersystem, das zur Erzeugung von Kalibrierzyklen ausgebildet ist;
- Das Wartungssystem und ein Qualifiziersystem, das zur Erzeugung von Qualifizierungszyklen ausgebildet ist;
- Das Kalibriersystem und das Qualifiziersystem;
- Das Kalibriersystem, das Wartungssystem und das Qualifiziersystem;
und das zum Integrieren der ausgelesenen Daten und zum Erzeugen des Aufgabenzyklus mittels der in das Verarbeitungssystem integrierten Daten ausgebildet und vorgesehen ist.
